# EUROPEAN PATENT APPLICATION

(11) **EP 4 559 762 A2**
(43) Date of publication of application: **28.05.2025**
(21) Application number: 24206164.6
(22) Date of filing: 11.10.2024
(51) Int. Cl.: B60S 3/00, G05D 1/225, G05D 1/249, B60L 15/40, B61L 23/04, G05D 105/45, G05D 107/70, G05D 109/10

(54) **CONTROL DEVICE AND CONTROL METHOD**

(30) Priority: 24.11.2023 JP 2023199108
(71) Applicant: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP)
(74) Representative: D Young & Co LLP

(57) **Abstract**

The control device includes an acquisition unit configured to acquire an individual information regarding an attribute of a moving object that moves to a work place by unmanned driving; and a generation unit configured to generate a control signal according to the individual information, wherein the control signal is a signal for controlling a work equipment provided in the work place.

## Description

### CROSS REFERENCE TO RELATED APPLICATIONS

This application claims priority to Japanese Patent Application No. 2023-199108, filed November 24, 2023, the disclosure of which is incorporated by reference herein in its entirety.

### BACKGROUND

### FIELD

The present disclosure relates to a control device and a control method.

There are known technologies for causing vehicles to run by unmanned driving during vehicle production steps (for example, Japanese Patent Application Publication (Translation of PCT Application) No. 2017-538619).

To date, sufficient consideration has not been given to how to control equipment provided in a work place in the case where moving objects, such as vehicles, are moved to the work place by unmanned driving instead of transporting them to the work place using a conveyor or the like.

### SUMMARY

The present disclosure may be realized by the following aspects.
(1) According to a first aspect of the present disclosure, a control device is provided. This control device comprises an acquisition unit configured to acquire an individual information regarding an attribute of a moving object that moves to a work place by unmanned driving; and a generation unit configured to generate a control signal according to the individual information, wherein the control signal is a signal for controlling a work equipment provided in the work place.
   The control device according to this aspect is capable of appropriately controlling the work equipment according to the individual information of the moving object that moves to a work place.
(2) The control device according to the above aspect may further comprise a transmission unit configured to transmit the control signal to the work equipment.
   The control device according to this aspect is capable of appropriately controlling the work equipment by remote control according to the individual information of the moving object that moves to a work place.
(3) In the control device according to the above aspect, the work equipment may comprise an actuator; a reception unit configured to receive the control signal transmitted from the transmission unit; and a driving control unit configured to drive the actuator using the control signal received by the reception unit.
   The control device according to this aspect is capable of appropriately controlling the work equipment by remote control according to the individual information of the moving object that moves to a work place.
(4) The control device according to the above aspect may further comprise a driving control unit configured to drive an actuator of the work equipment using the control signal.
   The control device according to this aspect is capable of appropriately controlling the work equipment according to the individual information of the moving object that moves to a work place.
(5) The control device according to the above aspect, the acquisition unit may acquire the individual information of a plurality of the moving objects, including a first moving object and a second moving object that moves to the work place after the first moving object, and the generation unit may generate a first control signal that is the control signal according to the individual information of the first moving object, and a second control signal that is the control signal according to the individual information of the second moving object, when the individual information of the first moving object has a content different from a content of the individual information of the second moving object, and the generation unit may generate only the first control signal without generating the second control signal when the content of the individual information of the first moving object is same as the content of the individual information of the second moving object.
   The control device according to this aspect is capable of eliminating unnecessary generation of the same control signals.
(6) The control device according to the above aspect, the acquisition unit may acquire the individual information of a plurality of the moving objects, including a first moving object and a second moving object that moves to the work place after the first moving object, the generation unit may generate a first control signal that is the control signal according to the individual information of the first moving object, and a second control signal that is the control signal according to the individual information of the second moving object, and the transmission unit may transmit the first control signal and the second control signal to the work equipment when the individual information of the first moving object has a content different from a content of the individual information of the second moving object, and the transmission unit may transmit the first control signal to the work equipment without transmitting the second control signal to the work equipment when the content of the individual information of the first moving object is same as the content of the individual information of the second moving object.
   The control device according to this aspect is capable of eliminating unnecessary transmission of the same control signals.
(7) The control device according to the above aspect, the acquisition unit may acquire the individual information of a plurality of the moving objects, including a first moving object and a second moving object that moves to the work place after the first moving object, the generation unit may generate a first control signal that is the control signal according to the individual information of the first moving object, and a second control signal that is the control signal according to the individual information of the second moving object, the transmission unit may transmit the first control signal and the second control signal to the work equipment, and the driving control unit may drive the actuator using the first control signal and subsequently drives the actuator using the second control signal when the individual information of the first moving object has a content different from a content of the individual information of the second moving object, and the driving control unit may drive the actuator using the first control signal without subsequently driving the actuator using the second control signal when the content of the individual information of the first moving object is same as the content of the individual information of the second moving object.
   The control device according to this aspect is capable of eliminating unnecessary driving of the actuator and achieving energy savings.
(8) The control device according to the above aspect may further comprise a detection unit configured to detect a state of the work equipment; and an execution unit configured to execute at least one of a process of decelerating the moving object, a process of changing a movement route of the moving object, and a process of notifying occurrence of an abnormality, when the state of the work equipment does not change according to the control signal.
   The control device according to this aspect is capable of appropriately addressing situations where the state of the work equipment does not change even though it is supposed to change.
(9) The control device according to the above aspect, the work equipment may be equipment having a pair of guide rails that adjust a traveling direction of the moving object, the individual information may include information regarding a width of the moving object, and the generation unit may generate the control signal for adjusting at least one of a gap and an angle between the pair of guide rails.
   The control device according to this aspect is capable of adjusting the gap and the angle between the guide rails according to the width of the moving object.
(10) The control device according to the above aspect, the work equipment may be equipment that sprays a liquid onto the moving object, and the generation unit may generate the control signal for adjusting a spray starting position of the liquid with respect to the moving object.
   The control device according to this aspect is capable of adjusting the spray starting position according to the individual information of the moving object.
(11) The control device according to the above aspect, the moving object may be a vehicle, the work equipment may be equipment that adjusts a wheel alignment of the moving object, and the generation unit may generate the control signal for adjusting a standby position of the work equipment.
   The control device according to this aspect is capable of adjusting the standby position of the work equipment according to the individual information of the moving object.
(12) The control device according to the above aspect, the work equipment may be equipment that emits an electromagnetic wave onto the moving object, and the generation unit may generate the control signal for adjusting a wavelength of the electromagnetic wave.
   The control device according to this aspect is capable of adjusting the wavelength of the electromagnetic wave emitted onto the moving object according to the individual information of the moving object.
(13) According to a second aspect of the present disclosure, a control method is provided. This control method comprises acquiring an individual information regarding an attribute of a moving object that moves to a work place by unmanned driving; generating a control signal according to the individual information, wherein the control signal is a signal for controlling a work equipment provided in the work place; and controlling the work equipment using the control signal.

The control method according to this aspect is capable of appropriately controlling the work equipment according to the individual information of the moving object that moves to a work place.

The present disclosure may also be implemented in various aspects other than control devices and control methods. For example, the present disclosure may also be realized in aspects as a system, a computer program, a storage medium storing a computer program, and the like.

### BRIEF DESCRIPTION OF THE DRAWINGS

Fig. 1 is an explanatory view showing a structure of a system of a first embodiment;
Fig. 2 is an explanatory view showing a structure of a vehicle of the first embodiment;
Fig. 3 is an explanatory view showing a structure of a server device of the first embodiment;
Fig. 4 is an explanatory view showing a structure of work equipment of the first embodiment;
Fig. 5 is an explanatory view showing a state in which a vehicle runs in a factory;
Fig. 6 is a flowchart showing procedures in the process of running control of a vehicle in the first embodiment;
Fig. 7 is a flowchart showing procedures in the process of operation control of work equipment in the first embodiment;
Fig. 8 is an explanatory view showing operation of work equipment in the first embodiment;
Fig. 9 is an explanatory view showing a structure of work equipment of a second embodiment;
Fig. 10 is an explanatory view showing a structure of work equipment of a third embodiment;
Fig. 11 is an explanatory view showing a structure of work equipment of a fourth embodiment;
Fig. 12 is an explanatory view showing a structure of work equipment of a fifth embodiment;
Fig. 13 is an explanatory view of a structure of work equipment of a sixth embodiment;
Fig. 14 is an explanatory view showing operation of work equipment in the sixth embodiment;
Fig. 15 is an explanatory view showing a structure of a vehicle of a seventh embodiment; and
Fig. 16 is a flowchart showing procedures in the process of running control of a vehicle in the seventh embodiment.

### DETAILED DESCRIPTION

### A. First Embodiment

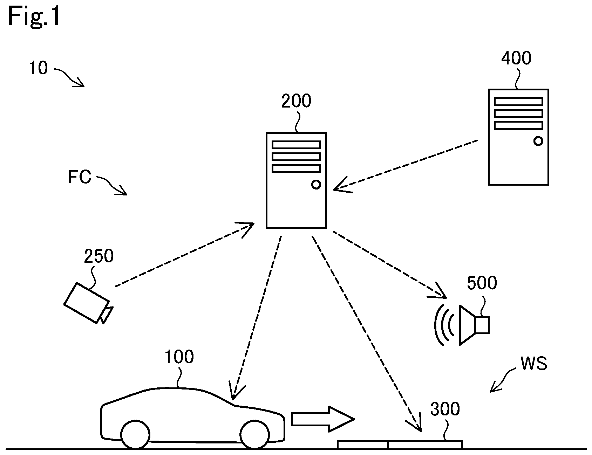

Fig. 1 is an explanatory view showing a structure of a system 10 having a server device 200, which is a control device in the first embodiment. The system 10 is used in factories, for example, for producing moving objects that are movable by unmanned driving. In the present embodiment, the system 10 includes at least one vehicle 100 as a moving object, a server device 200, at least one external sensor 250, work equipment 300, a step management device 400, and a notification device 500.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

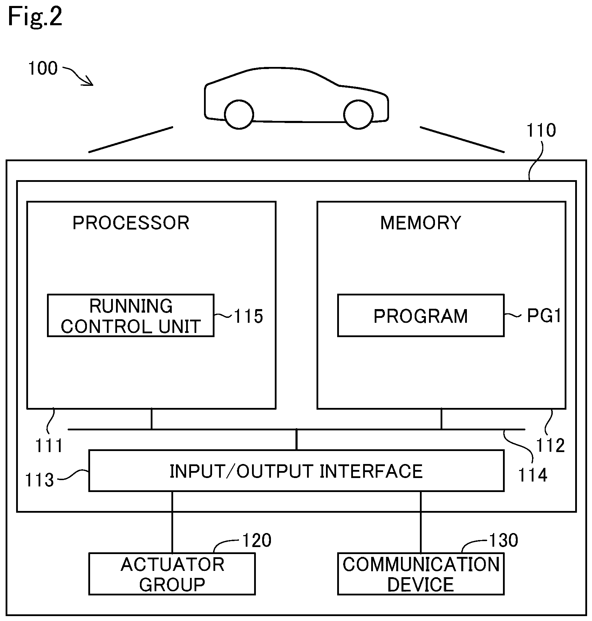

Fig. 2 is an explanatory view showing a structure of the vehicle 100 in the present embodiment. In the present embodiment, the vehicle 100 is structured to enable itself to run by remote control. The vehicle 100 includes a vehicle control device 110 for controlling various units of the vehicle 100, an actuator group 120 including at least one actuator driven under the control of the vehicle control device 110, and a communication device 130 for communicating with the server device 200 via wireless communication. The actuator group 120 includes an actuator for a driving device for accelerating the vehicle 100, an actuator for a steering device for changing the traveling direction of the vehicle 100, and an actuator for a braking device for decelerating the vehicle 100. The driving device includes a battery, a driving motor driven by electric power of the battery, and wheels rotated by the driving motor. The actuator of the driving device includes a driving motor.

The vehicle control device 110 is constituted of a computer with a processor 111, a memory 112, an input/output interface 113, and an internal bus 114. The processor 111, the memory 112, and the input/output interface 113 are connected via the internal bus 114 to enable bidirectional communication. The actuator group 120 and the communication device 130 are connected to the input/output interface 113.

The processor 111 functions as a running control unit 115 by executing a computer program PG1 stored in advance in the memory 112. The running control unit 115 controls the actuator group 120. When the vehicle 100 has a passenger, the running control unit 115 causes the vehicle 100 to run by controlling the actuator group 120 in response to the operation by the passenger. The running control unit 115 is capable of enabling the vehicle 100 to run by controlling the actuator group 120 in response to a running control signal received from the server device 200, regardless of whether or not the vehicle 100 has a passenger. The running control signal is a control signal for enabling the vehicle 100 to run. In the present embodiment, the running control signal includes the acceleration and the steering angle of the vehicle 100 as parameters. In alternative embodiments, the running control signal may include the speed of the vehicle 100 as a parameter instead of, or in addition to, the acceleration of the vehicle 100.

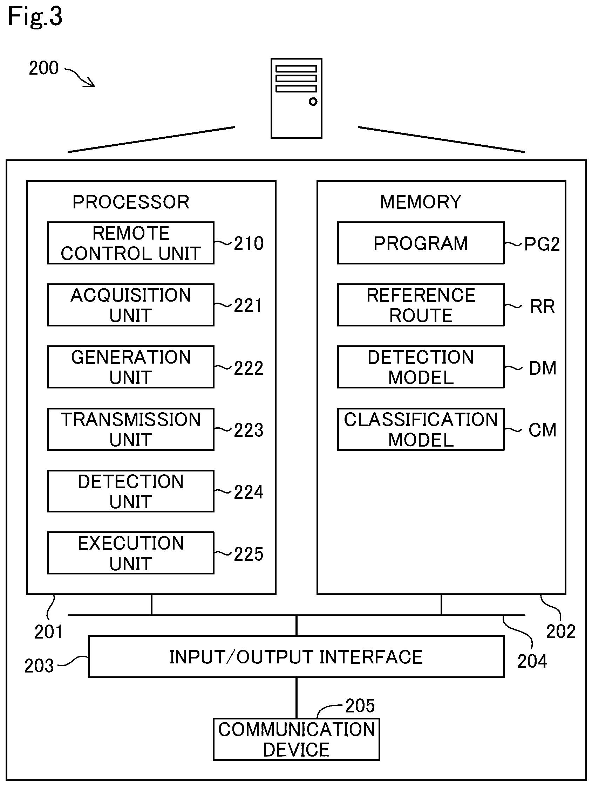

Fig. 3 is an explanatory view showing a structure of the server device 200 in the present embodiment. The server device 200 is constituted of a computer with a processor 201, a memory 202, an input/output interface 203, and an internal bus 204. The processor 201, the memory 202, and the input/output interface 203 are connected via the internal bus 204 to enable bidirectional communication. The input/output interface 203 is connected to a communication device 205 for enabling communication with the vehicle 100 and the work equipment 300 via wireless communication. In the present embodiment, the communication device 205 is capable of communication with the vehicle 100 and the work equipment 300 via wireless communication, and is also capable of communication with the external sensor 250, the step management device 400, and the notification device 500 via wired or wireless communication.

The processor 201 functions as a remote control unit 210, an acquisition unit 221, a generation unit 222, a transmission unit 223, a detection unit 224, and an execution unit 225 by executing a computer program PG2 stored in advance in the memory 202. The remote control unit 210 executes remote control of the vehicle 100. Specifically, the remote control unit 210 generates a running control signal using the detection results of the external sensor 250, and transmits the running control signal to the vehicle 100, thereby enabling the vehicle 100 to run by remote control.

The acquisition unit 221 acquires individual information of a vehicle 100, which moves to a work place WS by remote control. The work place WS is the place where works are performed on the vehicle 100. The works include, for example, assembling parts, inspections, adjustments, repairs, and the like. The individual information includes information regarding the attributes of the vehicle 100. The attributes of the vehicle 100 include, for example, vehicle type, model code, color, dimensions, and the like. In the present embodiment, the attribute of the vehicle 100 can be distinguished by the shape of the vehicle 100. Specifically, in the present embodiment, the attribute of the vehicle 100 is the vehicle type. The shape of the vehicle 100 differs depending on the vehicle type. Therefore, it is possible to distinguish the shape of the vehicle 100 based on the vehicle type. In addition to the vehicle type, the attribute of the vehicle 100 that can be distinguishable based on the shape of the vehicle 100 may be the model code or dimensions. The dimensions include, for example, the width of the vehicle 100, the height of the vehicle 100, and the length of the vehicle 100. The width, the height, and the length of the vehicle 100 may refer to the width, the height, and the length of the entire vehicle 100, or may refer to the width, the height, and the length from a predetermined position of the vehicle 100 to another predetermined position of the vehicle 100. For example, the width of the vehicle 100 may be a width from the left front wheel of the vehicle 100 to the right front wheel of the vehicle 100. The attribute of the vehicle 100 may be an attribute that can be distinguished based on the color of the vehicle 100. The attribute of the vehicle 100 that can be distinguishable based on the color of the vehicle 100 may be, for example, the body color, the color of the mirror, and the roof color. The generation unit 222 generates equipment control signals according to the individual information of the vehicle 100 that moves to the work place WS. The equipment control signal is a control signal used to control work equipment. The transmission unit 223 transmits the equipment control signals to the work equipment 300.

The detection unit 224 detects the state of the work equipment 300. The execution unit 225 executes at least one of a process of decelerating the vehicle 100, a process of changing the running route of the vehicle 100, and a process of notifying occurrence of an abnormality using the notification device 500, when the state of the work equipment 300 does not change according to the equipment control signal. The deceleration of the vehicle 100 includes stopping the vehicle 100. In alternative embodiments, the server device 200 may not include the detection unit 224 and the execution unit 225.

The external sensor 250 shown in Fig. 1 is a sensor located outside the vehicle 100. The external sensor 250 is used to detect the position and the orientation of the vehicle 100. In the present embodiment, the external sensor 250 is a camera provided in a factory FC. The external sensor 250 includes a communication device (not shown), and is capable of communication with the server device 200 via wired or wireless communication.

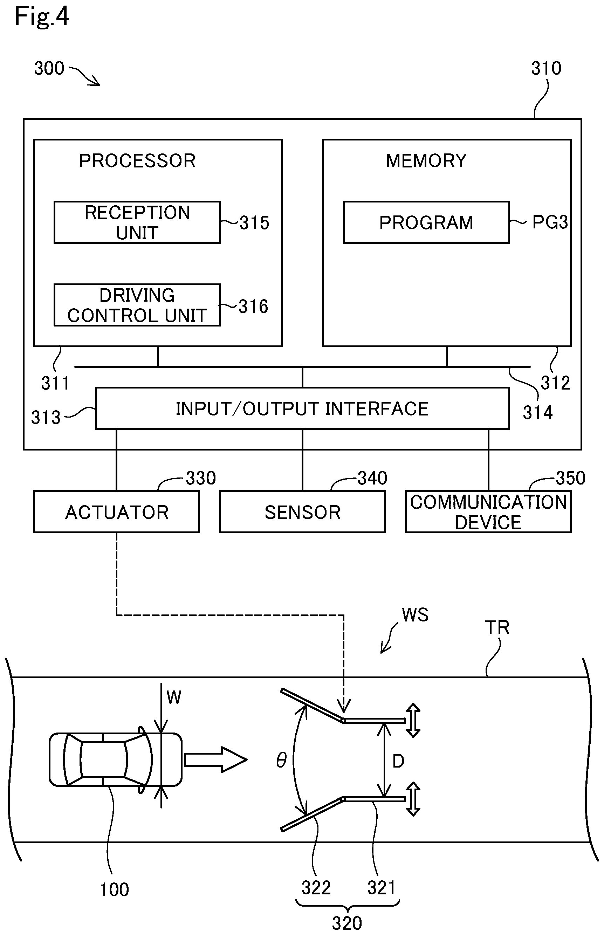

Fig. 4 is an explanatory view showing a structure of the work equipment 300 in the present embodiment. The work equipment 300 is provided in the work place WS. In the present embodiment, the work equipment 300 is equipment that adjusts the traveling direction of the vehicle 100. The work equipment 300 includes an equipment control device 310, a pair of left and right guide rails 320, an actuator 330 that drives the guide rails 320, a sensor 340 for detecting the state of the guide rails 320, and a communication device 350 for communicating with the server device 200 via wireless communication.

The guide rails 320 are placed on the floor of the work place WS. The floor of the work place WS, where the guide rails 320 are placed, is included in a track TR of the vehicle 100. When the wheels of the vehicle 100 are brought into contact with the guide rails 320, the traveling direction of the vehicle 100 is adjusted. The guide rails 320 is constituted of a pair of left guide rail and right guide rail. In the present embodiment, the left and right guide rails 320 each include a first member 321 and a second member 322. The end of the second member 322 is rotatably connected to the end of the first member 321. The first members 321 on the left and right guide rails 320 are arranged in parallel to each other. The second members 322 on the left and right guide rails 320 are arranged in such a way that the distance between them becomes narrower from the front side of the traveling direction of the vehicle 100 toward the back side of the traveling direction of the vehicle 100. The actuator 330 adjusts a gap D between the left and right guide rails 320 and an angle θ between the left and right guide rails 320. The gap D of the guide rails 320 refers to the distance between the left and right first members 321, and the angle θ of the guide rails refers to the angle between the left and right second members 322. The sensor 340 detects the gap D and the angle θ of the guide rails 320 as the state of the guide rails 320. The sensor 340 may be implemented by, for example, an encoder. In the following description, the value detected by the sensor 340 is referred to as a sensor value. The sensor value is transmitted to the server device 200. In alternative embodiments, the guide rails 320 may not be configured such that the angle θ of the guide rails 320 is changeable.

The equipment control device 310 is constituted of a computer with a processor 311, a memory 312, an input/output interface 313, and an internal bus 314. The processor 311, the memory 312, and the input/output interface 313 are connected via the internal bus 314 to enable bidirectional communication. The actuator 330, the sensor 340, and the communication device 350 are connected to the input/output interface 313.

In the present embodiment, the processor 311 functions as a reception unit 315 and a driving control unit 316 by executing a computer program PG3 stored in advance in the memory 312. The reception unit 315 receives the equipment control signals from the server device 200. In the present embodiment, the equipment control signal includes the gap D of the guide rails 320 and the angle θ of the guide rails 320 as parameters. The driving control unit 316 adjusts the gap D of the guide rails 320 and the angle θ of the guide rails 320 by driving the actuator 330 using the equipment control signal.

As shown in Fig. 1, the step management device 400 performs overall management of the production processes of the vehicle 100 in the factory FC. The step management device 400 is constituted of at least one computer. The step management device 400 has a database that stores various types of information of the vehicle 100. The various types of information stored in the database include the identification number, the vehicle type, the model code, the body color of the vehicle 100, the content of each production step, progress of the production step, and information regarding parts installed in the vehicle 100 in each production step. The step management device 400 includes a communication device (not shown), and is capable of communication with the server device 200 and various kinds of equipment in the factory FC via wired or wireless communication.

The notification device 500 is a device for notifying the administrator of the system 10 and workers in the factory of occurrence of abnormality in the factory. In the following description, the administrator of the system 10 and the workers in the factory are referred to as "administrator and the like". The notification device 500 is, for example, a warning buzzer provided in the factory or a warning lamp provided in the factory. The notification device 500 may be a tablet terminal carried by the administrator and the like. The notification device 500 includes a communication device (not shown), and is capable of communication with the server device 200 via wired or wireless communication.

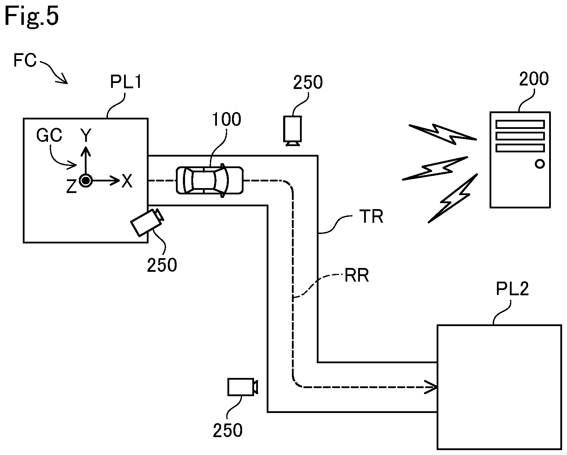

Fig. 5 is an explanatory view showing a state in which the vehicle 100 runs by remote control in the factory FC. In the present embodiment, the factory FC has a first place PL1 and a second place PL2. The first place PL1 and the second place PL2 are connected by the track TR on which the vehicle 100 can run. In the factory FC, a plurality of external sensors 250 are provided along the track TR. The first place PL1 is a place where the work for assembling the vehicles 100 is performed. The vehicle 100 assembled at the first place PL1 is capable of running by remote control, in other words, the vehicle 100 is capable of performing the three functions: "running," "turning," and "stopping" by remote control. The vehicle 100 moves from the first place PL1 to the second place PL2 by remote control. The second place PL2 is a place where the work for inspecting the vehicles 100 is performed. In the present embodiment, the work equipment 300 is provided at the second place PL2. The vehicle 100 that has passed the inspection at the second place PL2 is then shipped from the factory FC.

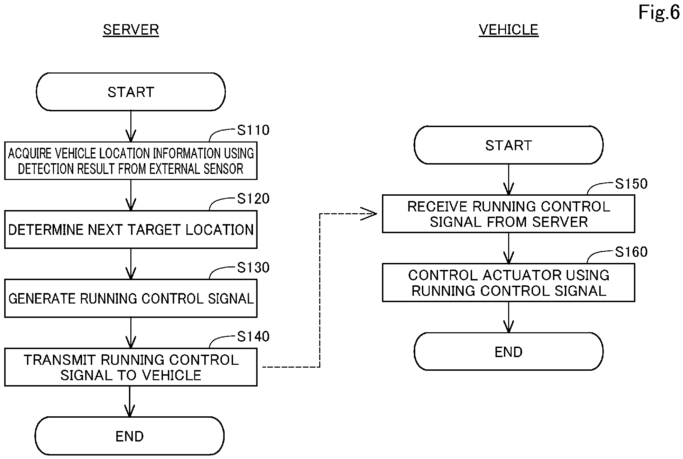

Fig. 6 is a flowchart illustrating a process procedure of running control of the vehicle 100 in the first embodiment. In the step S1, the remote control unit 210 acquires vehicle location information of the vehicle 100 using detection results output from the external sensor 250, which is a sensor located outside the vehicle 100. The vehicle location information is position information that serves as the basis for generating running control signals. In the present embodiment, the vehicle location information includes the position and orientation of the vehicle 100 in the reference coordinate system of the factory FC. In the present embodiment, the reference coordinate system of the factory FC is the global coordinate system GC, and any location in the factory FC is expressed with X, Y, and Z coordinates in the global coordinate system GC. In the present embodiment, the external sensor 250 is the camera, and the external sensor 250 outputs a captured image as a detection result. That is, in the step S1, the remote control unit 210 acquires the vehicle location information using captured images acquired from the camera, which is the external sensor 250.

More specifically, in step S1, the remote control unit 210 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 10 or outside the system 10. The detection model DM is stored in advance in the memory 202 of the server device 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The remote control unit 210 can acquire the orientation of the vehicle 100 through estimation based on the direction of a motion vector of the vehicle 100 detected from change in location of a feature point of the vehicle 100 between frames of the captured images using optical flow process, for example.

In step S2, the remote control unit 210 determines a target location to which the vehicle 100 is to move next. In the present embodiment, the target location is expressed by X, Y, and Z coordinates in the global coordinate system GC. The memory 202 of the server device 200 contains the reference route RR stored in advance as a route along which the vehicle 100 is to run. The route is expressed by a node indicating a departure place, a node indicating a way point, a node indicating a destination, and a link connecting nodes to each other. The remote control unit 210 determines the target location to which the vehicle 100 is to move next using the vehicle location information and the reference route RR. The remote control unit 210 determines the target location on the reference route RR ahead of a current location of the vehicle 100.

In step S3, the remote control unit 210 generates a running control signal for causing the vehicle 100 to run toward the determined target location. In the present embodiment, the running control signal includes an acceleration and a steering angle of the vehicle 100 as parameters. The remote control unit 210 calculates a running speed of the vehicle 100 from transition of the location of the vehicle 100 and makes comparison between the calculated running speed and a target speed of the vehicle 100 determined in advance. If the running speed is lower than the target speed, the remote control unit 210 generally determines an acceleration in such a manner as to accelerate the vehicle 100. If the running speed is higher than the target speed as, the remote control unit 210 generally determines an acceleration in such a manner as to decelerate the vehicle 100. If the vehicle 100 is on the reference route RR, the remote control unit 210 determines a steering angle and an acceleration in such a manner as to prevent the vehicle 100 from deviating from the reference route RR. If the vehicle 100 is not on the reference route RR, in other words, if the vehicle 100 deviates from the reference route RR, the remote control unit 210 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the remote control unit 210 transmits the generated running control signal to the vehicle 100. The remote control unit 210 repeats the acquisition of vehicle location information, the determination of a target location, the generation of a running control signal, the transmission of the running control signal, and others in a predetermined cycle.

In step S5, the running control unit 115 of the vehicle 100 receives the running control signal transmitted from the remote control unit 210. In step S6, the running control unit 115 controls actuator group 120 using the received running control signal, thereby causing the vehicle 100 to run at the acceleration and the steering angle indicated by the running control signal. The running control unit 115 repeats the reception of a running control signal and the control over actuator group 120 in a predetermined cycle.

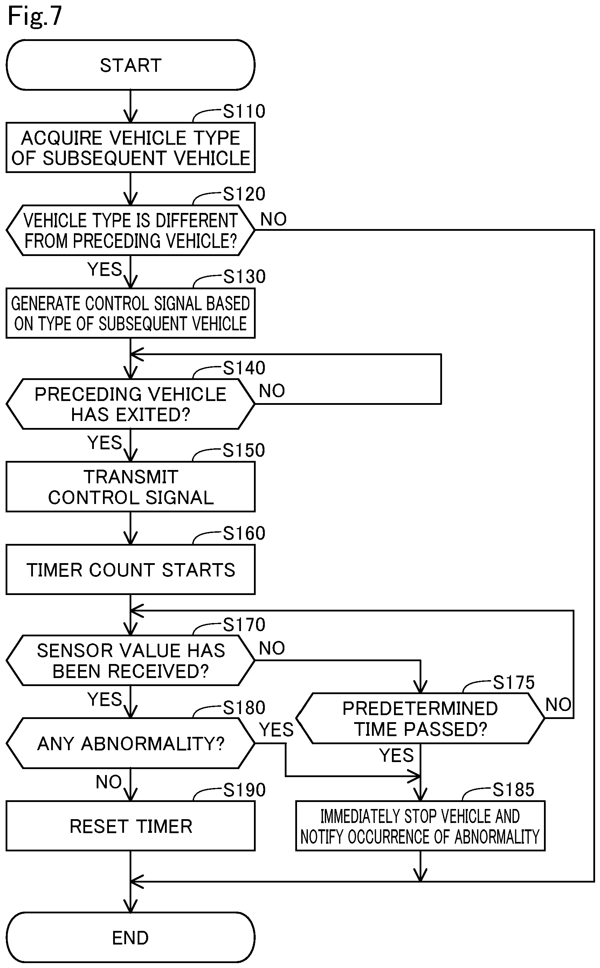

Fig. 7 is a flowchart showing procedures in the process of operation control of the work equipment 300. While referring to Fig. 7, the following describes a control method of the work equipment 300. In the step 110, the acquisition unit 221 acquires the individual information of the vehicle 100 that will move to the work place WS next. In the present embodiment, the vehicle 100 that will move to the work place WS next refers to the vehicle 100 that enters the guide rails 320. In the present embodiment, the acquisition unit 221 acquires the vehicle type of the vehicle 100 as the individual information. The vehicle type relates to the width of the vehicle 100, as the width W of the vehicle 100 varies depending on the vehicle type. Specifically, the acquisition unit 221 acquires captured images from the external sensor 250 that captures images of the vehicle 100 moving to the work place WS, and acquires the vehicle type of the vehicle 100 using the captured images. The vehicle type of the vehicle 100 included in the captured image can be acquired, for example, by inputting the captured image into a classification model CM that utilizes artificial intelligence. The classification model CM is prepared, for example, inside the system 10 or outside the system 10, and stored in advance in the memory 202 of the server device 200. Examples of the classification model CM include a trained machine learning model that has been trained to identify the vehicle type of the vehicle 100 included in the captured image. For this machine learning model, for example, a CNN trained by supervised learning using a training data set may be used. The training data set includes, for example, a plurality of training images with the vehicle 100, and labels that indicate the vehicle type of the vehicle 100 included in the training images. In alternative embodiments, the acquisition unit 221 may acquire the vehicle type of the vehicle 100 that moves to the work place WS next from the step management device 400.

In the step 120, the generation unit 222 determines whether or not the vehicle type of the vehicle 100 that enters the guide rails 320 next is different from the vehicle type of the vehicle 100 that has entered the guide rails 320 earlier. Here, the vehicle 100 that has entered the guide rails 320 earlier refers to the vehicle 100 that has entered the guide rails 320 immediately before the vehicle 100 that will enter the guide rails 320 next. In the following description, the vehicle 100 that will enter the guide rails 320 next is referred to as a subsequent vehicle and the vehicle 100 that has entered the guide rails 320 earlier is referred to as a preceding vehicle. At the time point of the step S120, the preceding vehicle may not have exited from the guide rails 320.

If it is determined that the vehicle type is different between the preceding vehicle and the subsequent vehicle in the step S120, the generation unit 222 generates an equipment control signal according to the vehicle type of the subsequent vehicle in the step S130. A database in which the vehicle type is associated with the gap D and the angle θ of the guide rails 320 is stored in advance in the memory 202 of the server device 200. The generation unit 222 generates, using the database, an equipment control signal that drives the actuator 330 to adjust the gap D and the angle θ of the guide rails 320 according to the vehicle type of the subsequent vehicle. In contrast, if it is determined that the preceding vehicle and the subsequent vehicle have the same vehicle type in the step S120, the generation unit 222 ends the process without generating the equipment control signal.

In the step S140, the transmission unit 223 determines whether or not the preceding vehicle has exited from the guide rails 320. In the present embodiment, the transmission unit 223 acquires vehicle position information of the preceding vehicle, for example, from the remote control unit 210, and determines whether or not the preceding vehicle has exited from the guide rails 320 using the vehicle position information. In alternative embodiments, the transmission unit 223 may determine whether or not the preceding vehicle has exited from the guide rails 320 using information acquired from the step management device 400. For example, the transmission unit 223 can determine that the preceding vehicle has exited from the guide rails 320 when the work that is performed on the preceding vehicle after the preceding vehicle is exited from the guide rails 320 has started.

If it is not determined that the preceding vehicle has exited from the guide rails 320 in the step S140, the transmission unit 223 repeats the step S140 until it is determined that the preceding vehicle has exited from the guide rails 320. In contrast, if it is determined in the step S140 that the preceding vehicle has exited from the guide rails 320, the transmission unit 223 transmits the equipment control signal to the work equipment 300 in the step S150. The driving control unit 316 of the work equipment 300 changes the gap D and the angle θ of the guide rails 320 by driving the actuator 330 using the received equipment control signal. The driving control unit 316 acquires the sensor value from the sensor 340 and transmits the sensor value to the server device 200.

In the step S160, the detection unit 224 starts counting time using the timer function, and, in the step S170, the detection unit 224 determines whether or not the sensor value has been received from the work equipment 300. In the present embodiment, the sensor value includes the gap D of the guide rails 320 and the angle θ of the guide rails 320. If it is not determined that the sensor value has been received in the step S170, in the step S175, the detection unit 224 determines whether or not a predetermined time has elapsed since the start of counting. The predetermined time mentioned above is set to be shorter than the time it takes for the vehicle 100 to enter the guide rails 320 from the start of counting. If it is not determined that the predetermined time has elapsed since the start of counting in the step S175, the detection unit 224 returns the process to the step S170 and determines again whether or not the sensor value has been received.

If it is determined that the sensor value has been received in the step S170, in the step S180, the detection unit 224 determines whether or not the sensor value is appropriate. If both the gap D and the angle θ of the guide rails 320 are within a predetermined range according to the vehicle type of the subsequent vehicle, the detection unit 224 determines that the sensor value is appropriate. When at least one of the gap D and the angle θ of the guide rails 320 falls out of the above-mentioned predetermined range, the detection unit 224 determines that the sensor value is inappropriate. If the sensor value is determined to be appropriate in the step S180, in the step S190, the detection unit 224 resets the time counting by the timer function and ends the process. In alternative embodiments, the driving control unit 316 may transmit the determination result as to whether or not the actuator 330 has been driven in response to the equipment control signal to the server device 200, instead of transmitting the sensor value to the server device 200. In this case, the detection unit 224 may confirm that the guide rails 320 have been operated based on the determination result. Further, the detection unit 224 may confirm that the guide rails 320 have been operated in response to the equipment control signal using the external sensor 250, instead of confirming that the guide rails 320 have been operated based on the sensor value acquired from the driving control unit 316.

If it is determined that the predetermined time has elapsed since the start of counting in the step S175, and if it is determined that the sensor value is inappropriate in the step S180, in the step S185, the execution unit 225 executes a process of instructing the remote control unit 210 to stop the subsequent vehicle, and a process of notifying the administrator and the like of the occurrence of an abnormality using the notification device 500, and then ends this process. Upon receiving the instruction from the execution unit 225, the remote control unit 210 generates a running control signal to stop the subsequent vehicle, and transmits the running control signal to the subsequent vehicle. The notification device 500 that has received the instruction from the execution unit 225 executes the notification. In alternative embodiments, in the step S185, the execution unit 225 may instruct the remote control unit 210 to decelerate the subsequent vehicle within a range that does not stop the subsequent vehicle, instead of instructing the remote control unit 210 to stop the subsequent vehicle. In the step S185, the execution unit 225 may instruct the remote control unit 210 to make the subsequent vehicle run while avoiding the guide rails 320, instead of instructing the remote control unit 210 to stop or decelerate the subsequent vehicle.

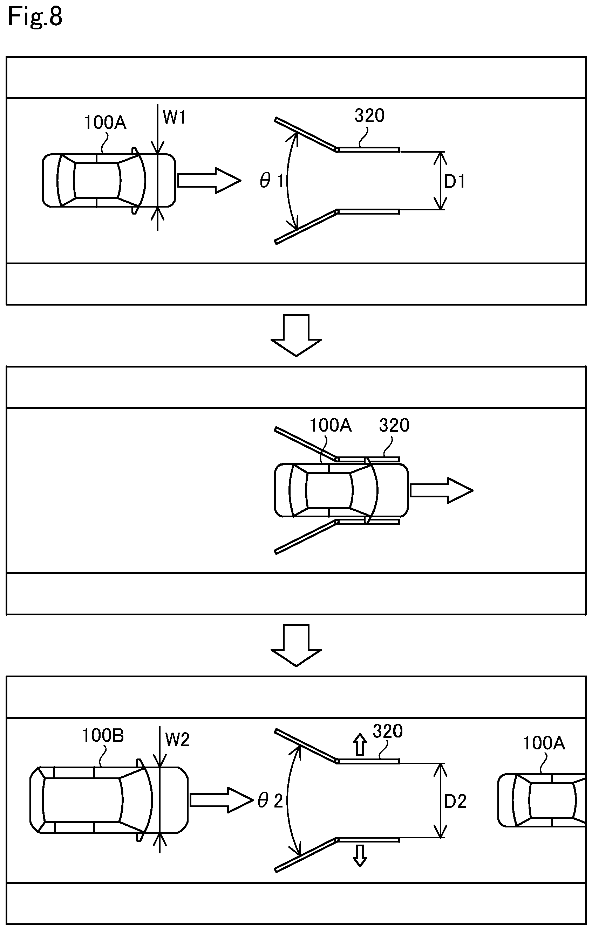

Fig. 8 is an explanatory view showing the operation of the work equipment 300. Fig. 8 illustrates a plurality of the vehicles 100A and 100B. In the following description, the vehicle 100A will be referred to as a first vehicle 100A, and the vehicle 100B will be referred to as a second vehicle 100B. The control signal corresponding to the vehicle type of the first vehicle 100A will be referred to as a first control signal, and the control signal corresponding to the vehicle type of the second vehicle 100B will be referred to as a second control signal. In cases of describing the first vehicle 100A and the second vehicle 100B without specifically distinguishing them from each other, they will simply be referred to as a vehicle 100. In cases of describing the first control signal and the second control signal without specifically distinguishing them from each other, they will simply be referred to as a control signal. When the first vehicle 100A, which is the preceding vehicle, enters the guide rails 320, the first control signal is transmitted from the server device 200 to the work equipment 300, and the gap D and the angle θ of the guide rails 320 are adjusted to the gap D1 and the angle θ1 corresponding to the vehicle type of the first vehicle 100A. In Fig. 8, the vehicle type of the first vehicle 100A is different from the vehicle type of the second vehicle 100B. The width W1 of the first vehicle 100A is different from the width W2 of the second vehicle 100B. Therefore, by transmitting the second control signal from the server device 200 to the work equipment 300 during the time after the first vehicle 100A exits from the guide rails 320 until the second vehicle 100B enters the guide rails 320, the gap D and the angle θ of the guide rails 320 are adjusted to the gap D2 and the angle θ2 corresponding to the vehicle type of the second vehicle 100B. In contrast, when the vehicle type of the first vehicle 100A is the same as the vehicle type of the second vehicle 100B, in other words, when the width W1 of the first vehicle 100A is the same as the width W2 of the second vehicle 100B, the gap D2 and the angle θ2 of the guide rails 320 corresponding to the vehicle type of the second vehicle 100B are the same as the gap D1 and the angle θ1 of the guide rails 320 corresponding to the vehicle type of the first vehicle 100A. Therefore, it is not necessary to change the gap D and the angle θ of the guide rails 320 during the time after the first vehicle 100A exits from the guide rails 320 until the second vehicle 100B enters the guide rails 320. In the present embodiment, when the first vehicle 100A and the second vehicle 100B have the same vehicle type, the second control signal is not transmitted from the server device 200 to the work equipment 300 during the time after the first vehicle 100A exits from the guide rails 320 until the second vehicle 100B enters the guide rails 320. Therefore, also when the second vehicle 100B enters the guide rails 320, the gap D and the angle θ of the guide rails 320 are kept at the gap D1 and the angle θ1 corresponding to the vehicle type of the first vehicle 100A.

According to the server device 200 in the present embodiment described above, the server device 200 generates an equipment control signal corresponding to the vehicle type of the vehicle 100 and transmits the equipment control signal to the work equipment 300. This allows the work equipment 300 to operate using the equipment control signal received from the server device 200, thereby switching to an appropriate state according to the vehicle type of the vehicle 100. In the present embodiment, the gap D and the angle θ of the guide rails 320 are switched to appropriate gap and angle according to the vehicle type of the vehicle 100 that enters the guide rails 320. Therefore, it is possible to appropriately adjust the traveling direction of the vehicle 100.

Further, in the present embodiment, when the vehicle type of the first vehicle 100A, which is the preceding vehicle, is different from the vehicle type of the second vehicle 100B, which is the subsequent vehicle, the generation unit 222 of the server device 200 generates the first control signal, which is an equipment control signal corresponding to the vehicle type of the first vehicle 100A, and the second control signal, which is an equipment control signal corresponding to the vehicle type of the second vehicle 100B, and when the first vehicle 100A, which is the preceding vehicle, and the second vehicle 100B, which is the subsequent vehicle, have the same vehicle type, the generation unit 222 generates the first control signal without generating the second control signal. Therefore, it is possible to eliminate unnecessary generation of the same equipment control signals.

Further, in the present embodiment, the server device 200 includes the transmission unit 223 that transmits the equipment control signal, and the work equipment 300 includes the reception unit 315 that receives the equipment control signal, and the driving control unit 316 that drives the actuator 330 using the equipment control signal. This allows the server device 200 to control the work equipment 300 by remote control.

Further, in the present embodiment, the server device 200 further generates the running control signal for causing the vehicle 100 to run by unmanned driving, and transmits the running control signal to the vehicle 100. In this way, the server device 200 enables the vehicle 100 to cooperate with the work equipment 300.

Further, in the present embodiment, the detection unit 224 detects abnormalities in the gap D and the angle θ of the guide rails 320, and the execution unit 225 instructs the remote control unit 210 not to allow the vehicle 100 to enter the guide rails 320 when an abnormality is detected by the detection unit 224. In this way, it is possible to prevent defects in adjusting the traveling direction of the vehicle 100 by the guide rails 320. Further, when an abnormality is detected by the detection unit 224, the execution unit 225 notifies the notification device 500 of the occurrence of the abnormality. This enables the administrator and the like to promptly recognize the occurrence of the abnormality.

### B. Second Embodiment:

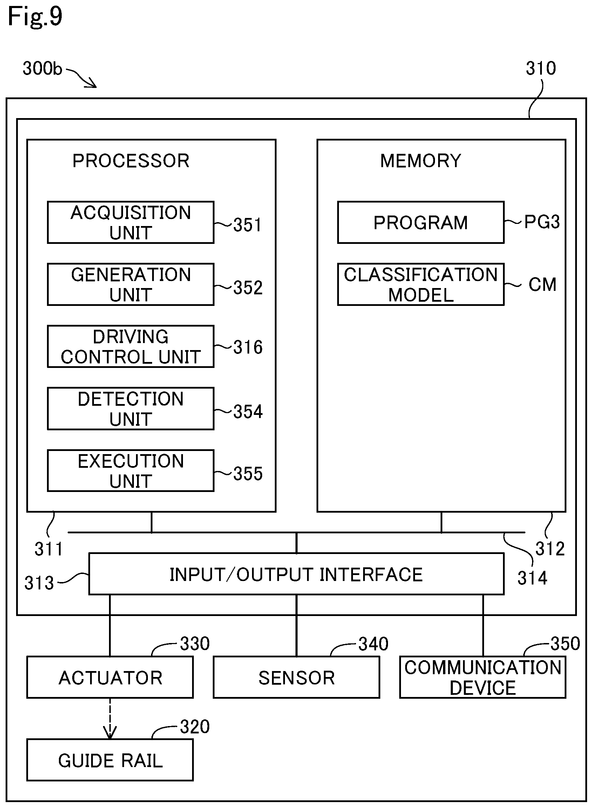

Fig. 9 is an explanatory view showing a structure of a work equipment 300b having an equipment control device 310, which is a control device in the second embodiment. The present embodiment differs from the first embodiment in that the server device 200 does not generate the equipment control signal, instead, the equipment control device 310 generates the equipment control signal. Other structures are the same as those in the first embodiment, unless otherwise specified.

In the present embodiment, the processor 311 of the equipment control device 310 functions as an acquisition unit 351, a generation unit 352, a driving control unit 316, a detection unit 354, and an execution unit 355 by executing a computer program PG3 stored in advance in the memory 312. The functions of the acquisition unit 351, the generation unit 352, the driving control unit 316, the detection unit 354, and the execution unit 355 are basically the same as those of the acquisition unit 221, the generation unit 222, the driving control unit 316, the detection unit 224, and the execution unit 225 in the first embodiment. In the present embodiment, the server device 200 does not have the acquisition unit 221, the generation unit 222, the transmission unit 223, the detection unit 224, and the execution unit 225 shown in Fig. 3.

The acquisition unit 351 then acquires the individual information of the vehicle 100 that will move to the work place WS next. The acquisition unit 351 acquires the vehicle type as the individual information. In the present embodiment, a classification model CM and a database in which the vehicle type is associated with the gap D and the angle θ of the guide rails 320 are stored in advance in the memory 312 of the equipment control device 310. The acquisition unit 351 acquires the vehicle type of the vehicle 100 that will move to the work place WS next using the captured image acquired from the external sensor 250 and the classification model CM. The generation unit 352 generates an equipment control signal corresponding to the vehicle type of the vehicle 100 that will move to the work place WS next using the acquired vehicle type and the database. The driving control unit 316 drives the actuator 330 using the equipment control signal generated by the generation unit 352. The detection unit 354 detects abnormalities in the work equipment 300b using the sensor 340. The execution unit 355 performs the process of instructing the server device 200 to stop the vehicle 100 that will move to the work place WS next when an abnormality is detected in the work equipment 300b, as well as the process of notifying the administrator and the like of the occurrence of the abnormality using the notification device 500. In alternative embodiments, the equipment control device 310 may not include the detection unit 354 and the execution unit 355. In addition, if an abnormality is detected in the work equipment 300b, the execution unit 355 may directly instruct the vehicle 100 that will move to the work place WS next to stop, without intervention of the server device 200.

According to the equipment control device 310 in the present embodiment described above, it is possible to adjust the gap D and the angle θ of the guide rails 320 according to the vehicle type of the vehicle 100 that will enter the guide rails 320 next, without using remote control of the server device 200.

### C. Third Embodiment

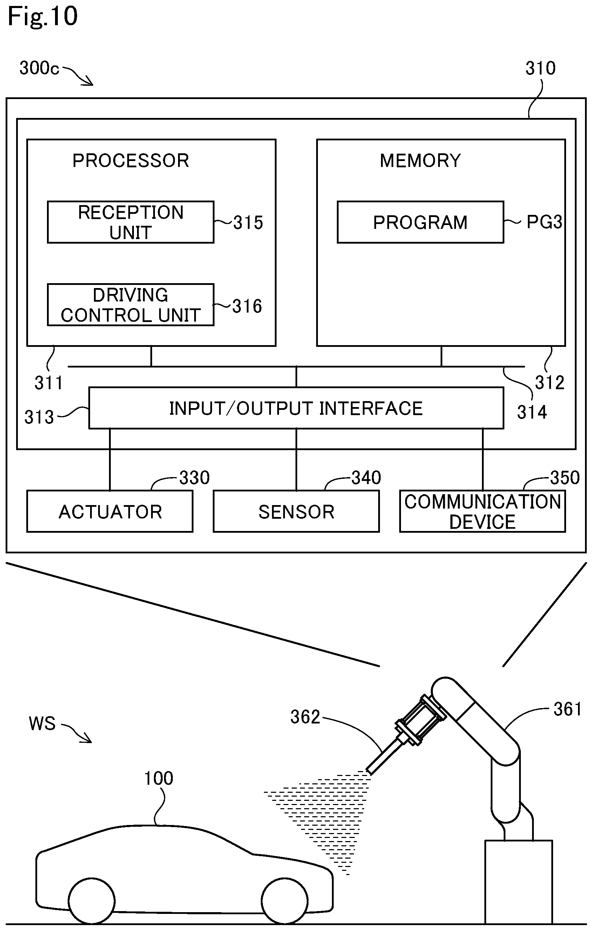

Fig. 10 is an explanatory view showing a structure of a work equipment 300c in the third embodiment. The present embodiment differs from the first embodiment in that the work equipment 300c is equipment that sprays a fluid onto the vehicle 100, and that the generation unit 222 of the server device 200 generates an equipment control signal for adjusting the spray starting position of the fluid with respect to the vehicle 100. Other structures are the same as those in the first embodiment, unless otherwise specified.

In the present embodiment, the work equipment 300c is equipment that sprays water. The work equipment 300c is used for the work of inspecting water resistance of the vehicle 100. In the water resistance inspection, water is sprayed onto the predetermined range of the vehicle 100 to inspect whether or not the water enters the interior of the vehicle 100. The work equipment 300c includes an arm unit 361 and a nozzle unit 362. In the present embodiment, the arm unit 361 is structured as a vertical articulated robot arm. The arm unit 361 is not limited to a vertical articulated robot arm, but may also be structured as, for example, a horizontal articulated robot arm, an orthogonal robot arm, or a parallel link robot arm. The nozzle unit 362 is attached to the top end portion of the arm unit 361. The nozzle unit 362 sprays water. The arm unit 361 is driven by the actuator 330. By driving the arm unit 361, it is possible to change the position and orientation of the nozzle unit 362. In other words, by driving the arm unit 361, it is possible to change the position where water is sprayed onto the vehicle 100.

The acquisition unit 221 of the server device 200 acquires the individual information of the vehicle 100 onto which the water is to be sprayed. The acquisition unit 221 acquires the vehicle type of the vehicle 100 as the individual information of the vehicle 100. The generation unit 222 generates an equipment control signal that includes the water spray starting position as a parameter. The height of the vehicle 100 varies depending on the vehicle type. The generation unit 222 generates the equipment control signal such that, for example, the higher the vehicle height of the vehicle type, the higher the water spray starting position. In the present embodiment, a database in which the vehicle type is associated with the spray starting position is stored in advance in the memory 202. The generation unit 222 generates the equipment control signal using the vehicle type information acquired by the acquisition unit 221 and the database. The transmission unit 223 transmits the equipment control signal generated by the generation unit 222 to the work equipment 300c. In the present embodiment, the generation unit 222 does not generate the equipment control signal for subsequent vehicles when the preceding vehicle and the subsequent vehicle have the same vehicle type. In this case, the transmission unit 223 transmits the equipment control signal generated for the preceding vehicle to the work equipment 300c before the subsequent vehicle enters the work place WS. The work equipment 300c operates using the same equipment control signal both during the inspection for the preceding vehicle and the inspection for the subsequent vehicle.

According to the server device 200 of the present embodiment described above, the water spray starting position can be adjusted according to the vehicle type of the vehicle 100 onto which the water is to be sprayed. In alternative embodiments, the work equipment 300c may be structured such that a fluid other than water is sprayed from the nozzle unit 362. For example, the work equipment 300c may be structured such that a fluid other than water or a gas such as hot air is sprayed from the nozzle unit 362.

### D. Fourth Embodiment

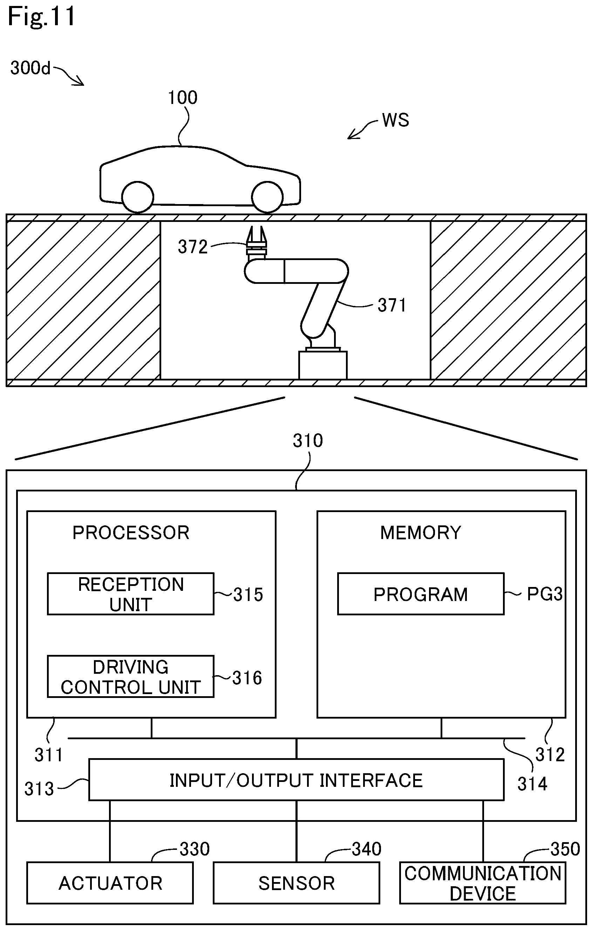

Fig. 11 is an explanatory view showing a structure of a work equipment 300d in the fourth embodiment. The present embodiment differs from the first embodiment in that the work equipment 300d is equipment that adjusts a wheel alignment of the vehicle 100, and that the generation unit 222 of the server device 200 generates an equipment control signal for adjusting the standby position of the work equipment 300d. Other structures are the same as those in the first embodiment, unless otherwise specified.

The work equipment 300d is provided under the floor of the work place WS, where the work of adjusting the wheel alignment of the vehicle 100 is performed. In the work of adjusting wheel alignment, the wheel alignment of the vehicle 100 is adjusted by adjusting the degree of tightening the wheel alignment adjustment screw provided on a lower part of the vehicle 100. The work equipment 300d includes an arm unit 371 and a hand unit 372. In the present embodiment, the arm unit 371 is structured as a vertical articulated robot arm. The arm unit 371 is not limited to a vertical articulated robot arm, but may also be structured as, for example, a horizontal articulated robot arm, an orthogonal robot arm, or a parallel link robot arm. The hand unit 372 is attached to the top end portion of the arm unit 371. The hand unit 372 is structured such that the degree of tightening the wheel alignment adjustment screw of the vehicle 100 is changeable. The arm unit 371 is driven by the actuator 330. By driving the arm unit 371, it is possible to change the position and orientation of the hand unit 372. In other words, by driving the arm unit 371, it is possible to change the standby position of the hand unit 372. The standby position of the hand unit 372 may also be referred to as the standby position of the work equipment 300d.

The acquisition unit 221 of the server device 200 acquires the individual information of the vehicle 100 for which the wheel alignment is to be adjusted. The acquisition unit 221 acquires the vehicle type information of the vehicle 100 as the individual information of the vehicle 100. The generation unit 222 generates an equipment control signal that includes the coordinates of the standby position of the hand unit 372 as a parameter. In the present embodiment, a database in which the vehicle type is associated with the coordinates of the standby position is stored in advance in the memory 202. The generation unit 222 generates the equipment control signal using the vehicle type information acquired by the acquisition unit 221 and the database. The transmission unit 223 transmits the equipment control signal generated by the generation unit 222 to the work equipment 300d. The position of the wheel alignment adjustment screw varies depending on the vehicle type. The standby position of the hand unit 372 is adjusted so that the hand unit 372 does not collide with the vehicle 100 when the vehicle 100 enters the work place WS. The standby position of the hand unit 372 is adjusted so that the hand unit 372 is located near the wheel alignment adjustment screw of the vehicle 100 when the vehicle 100 stops at the work place WS. In the present embodiment, the generation unit 222 does not generate the equipment control signal for subsequent vehicles when the preceding vehicle and the subsequent vehicle have the same vehicle type. In this case, the transmission unit 223 transmits the equipment control signal generated for the preceding vehicle to the work equipment 300d before the subsequent vehicle enters the work place WS. The work equipment 300d operates using the same equipment control signal both during the adjustment work for the preceding vehicle and the adjustment work for the subsequent vehicle.

According to the server device 200 of the present embodiment described above, it is possible to adjust the standby position of the work equipment 300d according to the vehicle type of the vehicle 100 for which the wheel alignment is to be adjusted.

### E. Fifth Embodiment

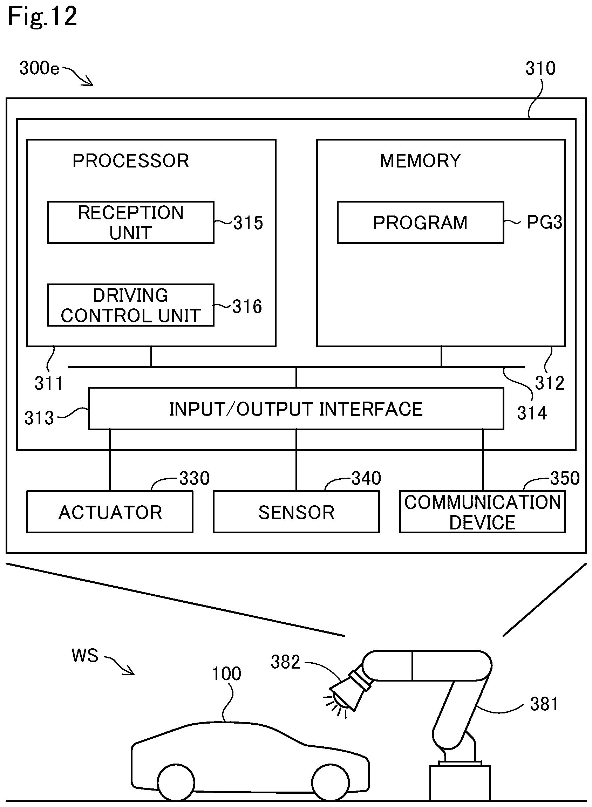

Fig. 12 is an explanatory view showing a structure of a work equipment 300e in the fifth embodiment. The present embodiment differs from the first embodiment in that the work equipment 300e is equipment that emits an electromagnetic wave onto the vehicle 100, and that the generation unit 222 generates an equipment control signal for adjusting the wavelength of the electromagnetic wave. Other structures are the same as those in the first embodiment, unless otherwise specified.

In the present embodiment, the work equipment 300e is equipment that emits visible light to the vehicle 100. The work equipment 300e is used, for example, for an inspection for exterior appearance of the vehicle 100. The work equipment 300e includes an arm unit 381 and a light 382. In the present embodiment, the arm unit 381 is structured as a vertical articulated robot arm. The arm unit 371 is not limited to a vertical articulated robot arm, but may also be structured as, for example, a horizontal articulated robot arm, an orthogonal robot arm, or a parallel link robot arm. The light 382 is attached to the top end portion of the arm unit 381. The light 382 is structured to be capable of changing the wavelength of the light to be emitted, in other words, the color of the light to be emitted. The arm unit 381 is driven by the actuator 330. By driving the arm unit 381, it is possible to change the position and orientation of the light 382. In other words, by driving the arm unit 381, it is possible to change the position and orientation of light emission with respect to the vehicle 100.

The acquisition unit 221 of the server device 200 acquires the individual information of the vehicle 100 to be inspected. The acquisition unit 221 acquires the body color information of the vehicle 100 as the individual information of the vehicle 100. The generation unit 222 generates an equipment control signal that includes the wavelength of the light emitted from the light 382 as a parameter. In the present embodiment, a database in which the body color is associated with the wavelength of light is stored in advance in the memory 202. The generation unit 222 generates the equipment control signal using the body color information acquired by the acquisition unit 221 and the database. The transmission unit 223 transmits the equipment control signal generated by the generation unit 222 to the work equipment 300e. For example, when the body color of the vehicle 100 is black, the light is absorbed, making the appearance dark; therefore, the light emitted from the light 382 is adjusted at a high illuminance. When the body color of the vehicle 100 is white, paint unevenness or the like cannot be easily detected under emission of white light; therefore, the light 382 is adjusted to emit, for example, red light, instead of white light. Further, the work equipment 300e is not used for the inspection for exterior appearance of the vehicle 100, but, for example, for the inspection of leakage of liquid, such as a coolant. If the coolant contains a fluorescent paint, the light 382 is adjusted to emit light having a wavelength that causes the fluorescent paint to produce luminescence. In the present embodiment, when the body color of the preceding vehicle is the same as the body color of the subsequent vehicle, the generation unit 222 does not generate the equipment control signal for changing the wavelength of light emitted from the light 382 according to the body color of the subsequent vehicle.

According to the server device 200 of the present embodiment described above, it is possible to adjust the form of lighting by the work equipment 300e according to the body color of the vehicle 100 to be inspected. In alternative embodiments, the work equipment 300e may be structured to emit ultraviolet light, infrared light, or the like, instead of visible light.

### F. Sixth Embodiment

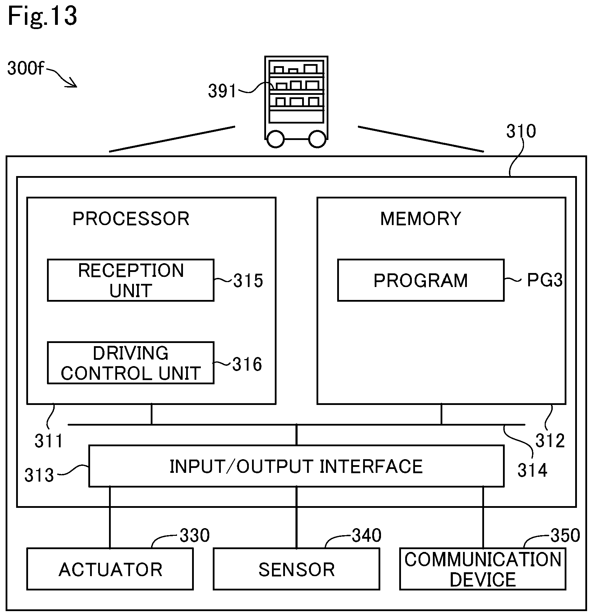

Fig. 13 is an explanatory view showing a structure of a work equipment 300f in the sixth embodiment. The present embodiment differs from the first embodiment in that the work equipment 300f is equipment that transports vehicle parts to be attached to the vehicle 100. Other structures are the same as those in the first embodiment, unless otherwise specified.

In the present embodiment, the work equipment 300f is structured as an unmanned transport vehicle that runs by remote control of the server device 200. The server device 200 is capable of causing the work equipment 300f to run, for example, by the same method as that for causing the vehicle 100 to run by remote control. The work equipment 300f is assigned to each vehicle 100, and runs by following the vehicle 100. The work equipment 300f transports parts to be attached to the vehicle 100 assigned. The work equipment 300f includes a cargo bed 391. The cargo bed 391 is loaded with parts to be attached to the vehicle 100. The acquisition unit 221 of the server device 200 acquires the individual information of the vehicle 100 to which the parts are to be attached. The acquisition unit 221 acquires the vehicle type of the vehicle 100 as the individual information of the vehicle 100. The generation unit 222 generates an equipment control signal for enabling the work equipment 300f to run by following the vehicle 100. The generation unit 222 acquires, for example, acceleration and steering angle of the vehicle 100 from the remote control unit 210, and generates an equipment control signal for causing the work equipment 300f to run at the same acceleration and steering angle as those of the vehicle 100. The transmission unit 223 transmits the equipment control signal generated by the generation unit 222 to the work equipment 300f.

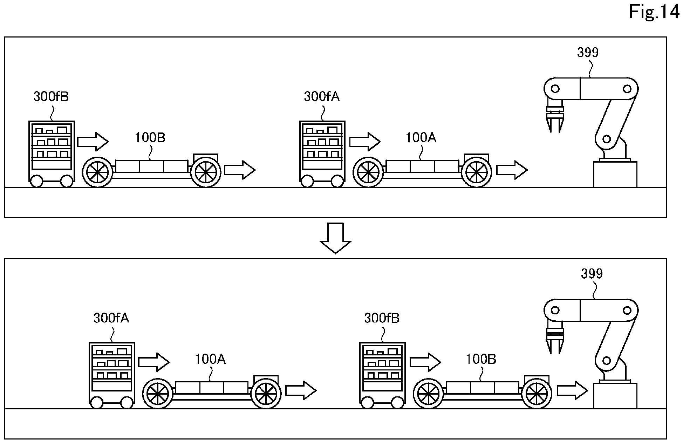

Fig. 14 is an explanatory view showing operation of the work equipment 300f in the present embodiment. Fig. 14 illustrates two vehicles 100A and 100B, and two units of work equipment 300fA and 300fB. The vehicle 100A is referred to as a first vehicle 100A, and the vehicle 100B is referred to as a second vehicle 100B. The work equipment 300fA is referred to as a first work equipment 300fA, and the work equipment 300fB is referred to as a second work equipment 300fB. The first work equipment 300fA runs by following the first vehicle 100A and the second work equipment 300fB runs by following the second vehicle 100B. The first vehicle 100A and the second vehicle 100B run in tandem, one behind the other. Therefore, the first work equipment 300fA and the second work equipment 300fB run in tandem, one behind the other. A robot arm is provided on each running route for the vehicles 100A and 100B to attach the parts loaded on the work equipment 300fA and 300fB to the vehicles 100A and 100B. When the first vehicle 100A and the first work equipment 300fA arrive at the predetermined assembly position near the robot arm, the parts loaded on the cargo bed 391 of the first work equipment 300fA are attached to the first vehicle 100A by the robot arm. After that, when the second vehicle 100B and the second work equipment 300fB arrive at the above assembly position, the parts loaded on the cargo bed 391 of the second work equipment 300fB are attached to the second vehicle 100B by the robot arm.

If the order of alignment of the first vehicle 100A and the second vehicle 100B is changed, the server device 200 changes the order of alignment of the first work equipment 300fA and the second work equipment 300fB. In other words, if the first vehicle 100A is running ahead of the second vehicle 100B, the first work equipment 300fA will run ahead of the second work equipment 300fB, and if the second vehicle 100B is running ahead of the first vehicle 100A, the second work equipment 300fB will run ahead of the first work equipment 300fA.

According to the server device 200 of the present embodiment described above, the order of alignment of the first work equipment 300fA and the second work equipment 300fB is changed according to the order of alignment of the first vehicle 100A and the second vehicle 100B. If the vehicle type of the first vehicle 100A is different from the vehicle type of the second vehicle 100B, the parts attached to these vehicles are also different. If the first work equipment 300fA is running ahead of the second work equipment 300fB even though the second vehicle 100B is running ahead of the first vehicle 100A, there is a possibility that the parts loaded on the first work equipment 300fA are attached to the second vehicle 100B by the robot arm. However, in the present embodiment, the server device 200 adjusts the second work equipment 300fB to run ahead of the first work equipment 300fA when the second vehicle 100B is running ahead of the first vehicle 100A. Therefore, it is possible to prevent attaching incorrect parts to the vehicle 100 by the robot arm. In alternative embodiments, the server device 200 may control a robot arm 399, in addition to the vehicle 100 and the work equipment 300f. In case that the order of alignment of the vehicles 100 is changed and the position of the parts to be held by the robot arm 399 next is changed accordingly, the server device 200 may control the robot arm 399 so that the robot arm 399 properly holds the parts and attaches the parts to the vehicle 100.

### G. Seventh Embodiment

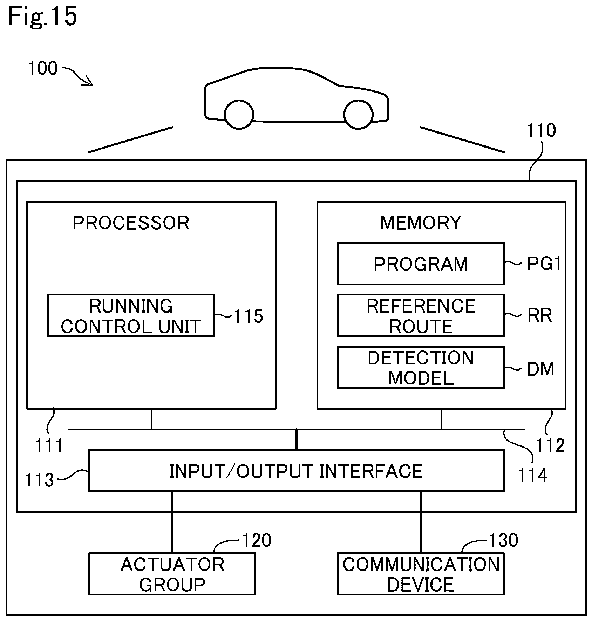

Fig. 15 is an explanatory view showing a structure of a vehicle 100 according to the seventh embodiment. The present embodiment differs from the first embodiment in that the vehicle 100 runs by autonomous control of the vehicle 100 instead of remote control by the server device 200. Other structures are the same as those in the first embodiment, unless otherwise specified.

In the present embodiment, the vehicle 100 is structured to be capable of running by autonomous control. The vehicle 100 is capable of communication with the external sensor 250 via wireless communication using the communication device 130. A detection model DM and a reference route RR are stored in the memory 112 in advance. The running control unit 115 generates a running control signal by itself and causes the vehicle 100 to run by controlling the actuator group 120 using the generated running control signal. In the present embodiment, the server device 200 does not have the remote control unit 210.

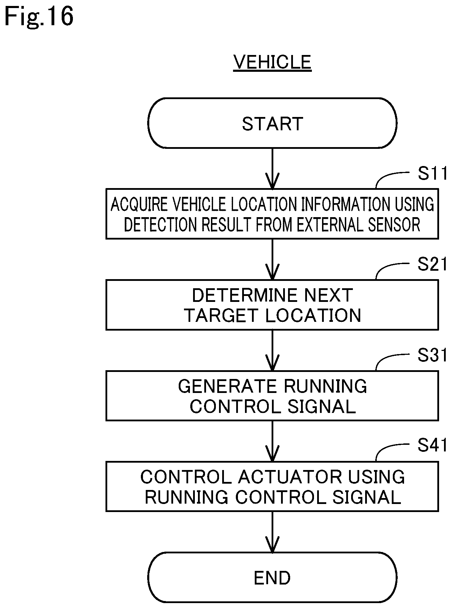

Fig. 16 is a flowchart showing procedures in the process of running control of the vehicle 100 in the present embodiment. In the step S11, the running control unit 115 acquires the vehicle position information using the detection results output from a camera, which is the external sensor 250. In the step S12, the running control unit 115 determines the target location to which the vehicle 100 should go next. In the step S13, the running control unit 115 generates a running control signal for causing the vehicle 100 to run toward the determined target location. In the step S14, the running control unit 115 controls the actuator group 120 using the generated running control signal, thereby causing the vehicle 100 to run according to the parameters indicated by the running control signal. The running control unit 115 repeats the acquisition of the vehicle position information, the determination of the target location, the generation of the running control signal, and the control of the actuator group 120, in a predetermined cycle.

According to the present embodiment described above, the vehicle 100 can be made run by autonomous control of the vehicle 100 without the remote control of the vehicle 100 by the server device 200.

### H. Alternative Embodiments

(H1) Each of the embodiments described above shows a case in which the acquisition units 221 and 251 acquire the individual information of the preceding vehicle and the individual information of the subsequent vehicle, and, when the content of the individual information of the preceding vehicle differs from the content of the individual information of the subsequent vehicle, the generation units 222 and 252 generate the first control signal, which is a control signal according to the individual information of the preceding vehicle, and the second control signal, which is a control signal according to the individual information of the subsequent vehicle, and, when the individual information of the preceding vehicle and the individual information of the subsequent vehicle have the same content, the generation units 222 and 252 generate the first control signal without generating the second control signal. Optionally, the generation units 222 and 352 may also be structured to generate the first control signal and the second control signal even when the individual information of the preceding vehicle and the individual information of the subsequent vehicle have the same content. In this case, for example, when the content of the individual information of the preceding vehicle differs from the content of the individual information of the subsequent vehicle, the transmission unit 223 transmits the first control signal and the second control signal to the work equipment 300-300f, and, when the individual information of the preceding vehicle and the individual information of the subsequent vehicle have the same content, the transmission unit 223 transmits the first control signal to the work equipment 300-300f without transmitting the second control signal to the work equipment 300-300f. For example, if it is not necessary to change the state of the work equipment 300-300f individually for the preceding vehicle and the subsequent vehicle, it is not necessary to transmit the second control signal to the work equipment 300-300f. When the individual information of the preceding vehicle and the individual information of the subsequent vehicle have the same content, the first control signal is transmitted to the work equipment 300-300f without transmitting the second control signal to the work equipment 300-300f, thereby eliminating unnecessary transmission of the same control signals.

The transmission unit 223 may be structured to transmit the first control signal and the second control signal to the work equipment 300-300f even when the individual information of the preceding vehicle and the individual information of the subsequent vehicle have the same content. In this case, the driving control unit 316 of the work equipment 300-300f may be structured to drive the actuator 330 using the first control signal and then drive the actuator 330 using the second control signal when the content of the individual information of the preceding vehicle is different from the content of the individual information of the subsequent vehicle, and drive the actuator 330 using the first control signal without subsequently driving the actuator 330 using the second control signal when the individual information of the preceding vehicle and the individual information of the subsequent vehicle have the same content. For example, if it is not necessary to change the state of the work equipment 300-300f individually for the preceding vehicle and the subsequent vehicle, it is not necessary to drive the actuator 330 using the second control signal. When the individual information of the preceding vehicle and the individual information of the subsequent vehicle have the same content, by driving the actuator 330 using the first control signal without subsequently driving the actuator 330 using the second control signal, it is possible to eliminate unnecessary driving of the actuator 330, thereby achieving energy savings.

(H2) In each of the above-described embodiments, the external sensor 250 is not limited to the camera but may be the distance measuring device, for example. The distance measuring device is a light detection and ranging (LiDAR) device, for example. In this case, detection result output from the external sensor 250 may be three-dimensional point cloud data representing the vehicle 100. The server 200 and the vehicle 100 may acquire the vehicle location information through template matching using the three-dimensional point cloud data as the detection result and reference point cloud data, for example.

(H3) In the above-described first embodiment to sixth embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(H4) In the above-described seventh embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(H5) In the above-described seventh embodiment, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 of the vehicle 100 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal.

(H6) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(H7) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(H8) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(H9) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(H10) The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computer-readable tangible non-transitory recording medium.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A control device (200; 310) comprising:
an acquisition unit (221; 351) configured to acquire an individual information regarding an attribute of a moving object (100) that moves to a work place (WS) by unmanned driving; and
a generation unit (222; 352) configured to generate a control signal according to the individual information, wherein the control signal is a signal for controlling a work equipment (300; 300b; 300c; 300d; 300e; 300f) provided in the work place.

2. The control device (200) according to claim 1, further comprising
a transmission unit (223) configured to transmit the control signal to the work equipment (300; 300c; 300d; 300e; 300f).

3. The control device (200) according to claim 2, wherein
the work equipment (300; 300c; 300d; 300e; 300f) comprises:
an actuator (330);
a reception unit (315) configured to receive the control signal transmitted from the transmission unit; and
a driving control unit (316) configured to drive the actuator using the control signal received by the reception unit.

4. The control device (310) according to claim 1, further comprising
a driving control unit (316) configured to drive an actuator (330) of the work equipment (300b) using the control signal.

5. The control device (200; 310) according to claim 1, wherein
the acquisition unit (221; 351) acquires the individual information of a plurality of the moving objects, including a first moving object (100A) and a second moving object (100B) that moves to the work place after the first moving object, and
the generation unit (222; 352)
generates a first control signal that is the control signal according to the individual information of the first moving object, and a second control signal that is the control signal according to the individual information of the second moving object, when the individual information of the first moving object has a content different from a content of the individual information of the second moving object, and
generates only the first control signal without generating the second control signal when the content of the individual information of the first moving object is same as the content of the individual information of the second moving object.

6. The control device (200) according to claim 2, wherein
the acquisition unit (221) acquires the individual information of a plurality of the moving objects, including a first moving object (100A) and a second moving object (100B) that moves to the work place after the first moving object,
the generation unit (222) generates a first control signal that is the control signal according to the individual information of the first moving object, and a second control signal that is the control signal according to the individual information of the second moving object, and
the transmission unit (223)
transmits the first control signal and the second control signal to the work equipment (300; 300c; 300d; 300e; 300f) when the individual information of the first moving object has a content different from a content of the individual information of the second moving object, and
transmits the first control signal to the work equipment without transmitting the second control signal to the work equipment when the content of the individual information of the first moving object is same as the content of the individual information of the second moving object.

7. The control device (200) according to claim 3, wherein
the acquisition unit (221) acquires the individual information of a plurality of the moving objects, including a first moving object (100A) and a second moving object (100B) that moves to the work place after the first moving object,
the generation unit (222) generates a first control signal that is the control signal according to the individual information of the first moving object, and a second control signal that is the control signal according to the individual information of the second moving object,
the transmission unit (223) transmits the first control signal and the second control signal to the work equipment (300; 300c; 300d; 300e; 300f), and
the driving control unit (316)
drives the actuator using the first control signal and subsequently drives the actuator using the second control signal when the individual information of the first moving object has a content different from a content of the individual information of the second moving object, and
drives the actuator using the first control signal without subsequently driving the actuator using the second control signal when the content of the individual information of the first moving object is same as the content of the individual information of the second moving object.

8. The control device (200; 310) according to claim 1, further comprising:
a detection unit (224; 354) configured to detect a state of the work equipment; and
an execution unit (225; 355) configured to execute at least one of a process of decelerating the moving object, a process of changing a movement route of the moving object, and a process of notifying occurrence of an abnormality, when the state of the work equipment does not change according to the control signal.

9. The control device (200;310) according to claim 1, wherein
the work equipment (300;300b) is equipment having a pair of guide rails (320) that adjust a traveling direction of the moving object,
the individual information includes information regarding a width of the moving object, and
the generation unit generates the control signal for adjusting at least one of a gap and an angle between the pair of guide rails.

10. The control device (200; 310) according to claim 1, wherein
the work equipment (300c) is equipment that sprays a liquid onto the moving object, and
the generation unit generates the control signal for adjusting a spray starting position of the liquid with respect to the moving object.

11. The control device (200; 310) according to claim 1, wherein
the moving object is a vehicle,
the work equipment (300d) is equipment that adjusts a wheel alignment of the moving object, and
the generation unit generates the control signal for adjusting a standby position of the work equipment.

12. The control device (200; 310) according to claim 1, wherein
the work equipment (300e) is equipment that emits an electromagnetic wave onto the moving object, and
the generation unit generates the control signal for adjusting a wavelength of the electromagnetic wave.

13. A control method comprising:
acquiring an individual information regarding an attribute of a moving object (100) that moves to a work place (WS) by unmanned driving;
generating a control signal according to the individual information, wherein the control signal is a signal for controlling a work equipment (300; 300b; 300c; 300d; 300e; 300f) provided in the work place; and
controlling the work equipment using the control signal.
